# EUROPÄISCHE PATENTANMELDUNG

(11) **EP 4 088 625 A1**
(43) Veröffentlichungstag der Anmeldung: **16.11.2022**
(21) Anmeldenummer: 22171240.9
(22) Anmeldetag: 03.05.2022
(51) Int. Cl.: A47G 29/14

(54) **PAKETSCHLEUSE FÜR EINE AUSSENWAND EINES GEBÄUDES ODER EINE UMWEHRUNG EINES BALKONS, VERFAHREN ZUM ANLIEFERN EINES PAKETS MIT EINEM UNBEMANNTEN FLUGZEUG UND ZUM SCHLEUSEN DES PAKETS DURCH EINE PAKETSCHLEUSE, AUSSENWAND EINES GEBÄUDES UND UMWEHRUNG FÜR EINEN BALKON EINES GEBÄUDES**

(30) Priorität: 11.05.2021 DE 102021112296
(71) Anmelder: Schöck Bauteile GmbH, 76534 Baden-Baden (DE)
(72) Erfinder:
(74) Vertreter: LBP Lemcke, Brommer & Partner Patentanwälte mbB

(57) **Zusammenfassung**

Die Erfindung betrifft eine Paketschleuse (1) für eine Außenwand (13) eines Gebäudes oder eine Umwehrung eines Balkons, die zur automatischen Anlieferung und Abholung eines Pakets (2) mittels eines unbemannten Flugzeugs, insbesondere einer Logistikdrohne dient; ein Verfahren zum Anliefern eines Pakets (2) mit einem unbemannten Flugzeug, insbesondere einer Logistikdrohne; eine Außenwand (13) mit einer Paketschleuse (1); und eine Umwehrung mit einer Paketschleuse (1).

## Beschreibung

Die vorliegende Erfindung betrifft eine Paketschleuse für eine Außenwand eines Gebäudes oder eine Umwehrung eines Balkons, die zur automatischen Anlieferung und Abholung eines Pakets mittels eines unbemannten Flugzeugs, insbesondere einer Logistikdrohne dient, und ein Verfahren zur Anlieferung eines Pakets mit einem unbemannten Flugzeug und zum Schleusen des Pakets durch diese Paketschleuse. Weiterhin betrifft die vorliegende Erfindung eine Außenwand eines Gebäudes und eine Umwehrung für einen Balkon eines Gebäudes, die jeweils eine solche Paketschleuse umfassen.

Pakete werden heutzutage entweder persönlich an einen Empfänger zugestellt oder in im öffentlichen Raum aufgestellten Paketstationen zwischengelagert, bis der Empfänger das Paket von der Paketstation abholt. Vorab wird ein in dem Paket zu versendender Paketinhalt in einem Logistikzentrum oder von einem Versender in dem Paket verpackt und mittels eines personengesteuerten Zustellfahrzeuges zum Empfänger oder der Paketstation transportiert. Diese Art der Paketzustellung ist sehr personal- und damit kostenintensiv und erfordert in den meisten Fällen die Anwesenheit des Empfängers oder das Vorhandensein einer Paketstation in der näheren Umgebung des Empfängers während der Paketzustellung. Zudem ist der Zustellzeitraum auf bestimmte Tageszeiten begrenzt.

Um diese Nachteile zu überwinden und der aufgrund des steigenden Online-Versandhandels gestiegenen Anzahl an zuzustellenden Paketen gerecht zu werden, sieht eine Weiterentwicklung dieser Paketzustellung die Verwendung von unbemannten Flugzeugen, insbesondere Logistikdrohnen vor, die die zuzustellenden Pakete vom Logistikzentrum oder auch von einem LKW abholen und an einen vom Empfänger vorgegebenen Ablageort ablegen, der beispielsweise als Paketablageplattform, auf der die Logistikdrohne das Paket ablegen kann, oder als Paketcontainer ausgebildet sein kann, der das angelieferte Paket aufnehmen kann. Sowohl die Paketablageplattform als auch der Paketcontainer können auf dem Grundstück des Empfängers aufgestellt werden. Beispielsweise geht aus der WO 2016/094067 A1 ein Paketcontainer mit einem Containerinnenbereich, der zur Aufnahme eines Pakets dient, und einer Kommunikationseinheit hervor, die zur Kommunikation zwischen der das Paket anliefernden Logistikdrohne und dem Paketcontainer dient. Durch die Verwendung einer unbemannten Logistikdrohne in Kombination mit einem solchen Paketcontainer kann zwar auf Zustellpersonal verzichtet werden. Mit diesem Paketcontainer sind allerdings die Nachteile verbunden, dass
- der Empfänger das Paket aus dem Containerinnenbereich herausholen und in sein Haus oder Wohnung tragen muss,
- der Paketcontainer aufgebrochen und das in dessen Containerinnenbereich befindliche Paket gestohlen, und
- der Paketinhalt aufgrund der Umgebungsbedingungen beschädigt oder zerstört
werden kann. Zudem ist die Anzahl an auf Empfängerseite entgegennehmbaren Paketen auf das Volumen des Containerinnenbereichs beschränkt. Überschreiten die Anzahl und Größe der anzuliefernden Pakete das Volumen des Containerinnenbereichs, dann können nicht alle Pakete angeliefert werden. Die drei letztgenannten Nachteile kommen insbesondere dann zum Tragen, wenn der Empfänger verreist und daher das Paket über einen längeren Zeitraum nicht aus dem Containerinnenbereich herausholen kann. Sofern der Empfänger des Pakets nicht in einem Einfamilienhaus, sondern in einem Mehrfamilienhaus wohnt, müssen zudem auf dem Grundstück des Mehrfamilienhauses mehrere solcher Paketcontainer aufgestellt werden, was insbesondere in Stadtgebieten mit kleinen Grundstücksflächen zu Platzproblemen bei der Aufstellung der Paketcontainer führt.

Der vorliegenden Erfindung liegt daher die Aufgabe zugrunde, eine Paketschleuse für eine Außenwand eines Gebäudes oder eine Umwehrung eines Balkons, ein Verfahren zum Anliefern eines Pakets mit einem unbemannten Flugzeug und zum Schleusen des Pakets durch eine Paketschleuse, eine Außenwand eines Gebäudes und eine Umwehrung für einen Balkon eines Gebäudes anzugeben, die eine vereinfachte Anlieferung einer unbegrenzten Anzahl an Paketen von einem unbemannten Flugzeug direkt in einen Wohn- bzw. Balkonbereich des Empfängers und die sichere Verwahrung des Paketinhalts auch in Abwesenheit des Empfängers ermöglichen.

Diese Aufgabe wird durch eine Paketschleuse für eine Außenwand eines Gebäudes oder eine Umwehrung eines Balkons nach Anspruch 1, ein Verfahren zum Anliefern eines Pakets mit einem unbemannten Flugzeug und zum Schleusen des Pakets durch eine Paketschleuse nach Anspruch 11, eine Außenwand eines Gebäudes nach Anspruch 14 und eine Umwehrung für einen Balkon eines Gebäudes nach Anspruch 15 gelöst. Vorteilhafte Ausgestaltungen und Weiterbildungen der Erfindung sind Gegenstände von Unteransprüchen.

Eine Paketschleuse der eingangs genannten Art dient zur automatischen Anlieferung und Abholung eines Pakets mittels eines unbemannten Flugzeugs, insbesondere einer Logistikdrohne, und umfasst erfindungsgemäß einen Grundkörper mit zumindest einem Durchlass für das Paket, einer ersten Seite für die Anlieferung oder Abholung des Pakets und einer der ersten Seite gegenüberliegenden zweiten Seite für eine Lagerung des Pakets. Mit anderen Worten weist der Grundkörper zwei einander gegenüberliegende Seiten auf; die erste Seite dient zur Anlieferung oder Abholung des Pakets und die zweite Seite zur Lagerung des Pakets nach seiner Anlieferung oder vor seiner Abholung.

Weiterhin weist die Paketschleuse ein Schleusentor auf, welches den Durchlass in seinem geschlossenen Zustand im Wesentlichen vollständig verschließt und ihn in seinem geöffneten Zustand zum Schleusen des Pakets durch den Durchlass freigibt. Dieses Schleusentor ist zumindest in seinem geöffneten Zustand vorzugsweise auf der ersten Seite oder der zweiten Seite des Grundkörpers angeordnet. Damit ein angeliefertes Paket von dem unbemannten Flugzeug abgelegt oder ein abzuholendes Paket von dem unbemannten Flugzeug aufgenommen werden kann, weist die Paketschleuse erfindungsgemäß weiterhin eine Paketablagefläche auf, die zumindest im geöffneten Zustand des Schleusentors auf der ersten Seite des Grundkörpers angeordnet ist. Die Formulierung "zumindest im geöffneten Zustand des Schleusentors" bedeutet in diesem Zusammenhang, dass die Paketablagefläche entweder nur im geöffneten Zustand des Schleusentors auf der ersten Seite, also der Seite des Grundkörpers für die Anlieferung und Abholung der Pakete angeordnet ist, oder sowohl im geöffneten als auch geschlossenen Zustand des Schleusentors.

Um das Schleusentor von dem geschlossenen Zustand in den geöffneten Zustand und in umgekehrter Richtung zu überführen, umfasst die Paketschleuse außerdem ein Antriebsmittel. Dieses Antriebsmittel wirkt mit dem bewegbaren Schleusentor derart zusammen, dass es das Schleusentor von dem geschlossenen Zustand in den geöffneten Zustand und in umgekehrter Richtung überführt und folglich den Durchlass für das Durchschleusen von Paketen freigibt oder verschließt.

Das unbemannte Flugzeug kann vom Logistikzentrum die Adressdaten des Empfängers erhalten, sodass es vom Logistikzentrum zum Standort des Empfängers fliegen kann. Damit das unbemannte Flugzeug auch die genauen Standortdaten der Paketschleuse innerhalb der Außenwand oder der Balkonumwehrung kennt, weist die Paketschleuse erfindungsgemäß eine Kommunikationseinheit auf, die dazu ausgebildet ist, mit dem unbemannten Flugzeug bei der Anlieferung oder Abholung des Pakets kontaktlos zu kommunizieren. Im Rahmen dieser Kommunikation zwischen der Kommunikationseinheit der Paketschleuse und dem unbemannten Flugzeug werden beispielsweise GPS-Daten, Daten zur relativen Höhe oder dergleichen der Paketschleuse an das unbemannte Flugzeug übermittelt und Informationen über die erfolgende Paketanlieferung oder -abholung in Form eines digitalen Anlieferungs- oder Ablieferungshinweis ausgetauscht. Zu diesen Informationen zählen beispielsweise die Paketgröße, Name des Paketversenders, der Paketinhalt, dessen Lagerungsbedingungen und/oder die Paketanzahl. Die Kommunikationseinheit ist zudem mit dem Antriebsmittel der Paketschleuse informationsleitend verbunden, wodurch das Schleusentor bei der Anlieferung oder Abholung des Pakets von dem geschlossenen Zustand in den geöffneten Zustand sowie in umgekehrter Richtung überführbar ist. Diese Kommunikationseinheit kann einen Sender für Positionsdaten der Paketschleuse und/oder einen Empfänger für Positionsdaten des unbemannten Flugzeuges und/oder Daten betreffend das Paket aufweisen.

Die Paketschleuse kann derart in die Außenwand eines Gebäudes oder in die Umwehrung, insbesondere ein Balkonbrüstung oder ein Balkongeländer eines Balkons, integriert werden, dass ihr Grundkörper die Außenwand des Gebäudes oder ein vertikal stehendes Umwehrungselement des Balkons, insbesondere ein Balkongeländer oder eine Balkonbrüstung durchquert, sodass ein von dem unbemannten Flugzeug angeliefertes Paket durch den Durchlass von der ersten Seite zu der zweiten Seite des Grundkörpers geschleust und dadurch in einem Gebäude- oder Balkoninnenbereich gelagert werden kann, bis der Empfänger das Paket entgegennimmt und ggf. auspackt. In Abhängigkeit davon, ob die Paketschleuse in die Außenwand das Gebäudes oder in die Umwehrung, insbesondere die Balkonbrüstung oder das Balkongeländer eines Balkons, integriert ist, befindet sich die erste Seite des Grundkörpers auf einer zu einer Gebäudeaußenseite hin ausgerichteten Wandaußenseite der Außenwand des Gebäudes oder auf einer Umwehrungsaußenseite des Umwehrungselements. Die zweite Seite des Grundkörpers ist auf einer zu einer Gebäudeinnenseite hin ausgerichteten Wandinnenseite oder auf einer zu einer Gebäudeseite hin ausgerichteten Umwehrungsinnenseite des Umwehrungselements angeordnet. Wie bereits zuvor erwähnt, ist die Paketablagefläche entweder nur im geöffneten Zustand oder im geöffneten und geschlossenen Zustand des Schleusentors auf der ersten Seite des Grundkörpers angeordnet. Auf ihr kann das Paket von dem unbemannten Flugzeug abgelegt oder von ihr das Paket von dem unbemannten Flugzeug aufgenommen werden.

Bei einem Einbau von aus dem Stand der Technik bekannten Briefkästen aus Metall oder einer Metalllegierung in eine Außenwand eines Gebäudes entsteht im Bereich des Briefkastens eine Wärmebrücke, wodurch Wärme aus einem Gebäudeinnenbereich an die Gebäudeumgebung abgegeben wird. Um diesen Wärmeverlust zu kompensieren, wird ein erhöhter Energiebedarf bei der Beheizung des Gebäudeinnenbereichs benötigt. Um die Bildung einer solchen Wärmebrücke im Fall der vorliegenden Paketschleuse zu vermeiden und den Energiebedarf bei der Beheizung des Gebäudes zu reduzieren, sieht eine vorteilhafte Ausgestaltung der erfindungsgemäßen Paketschleuse vor, dass das Schleusentor zumindest teilweise aus einem wärmedämmenden Material ausgebildet ist. Beispielsweise kann das Schleusentor eine Schichtstruktur mit zumindest einer Kernschicht, die zumindest teilweise aus dem wärmedämmenden Material ausgebildet ist, und zumindest zwei die Kernschicht jeweils einseitig begrenzende Außenschichten aufweisen. Diese Außenschichten bilden vorzugsweise die beiden Außenseiten des Schleusentors. Die Kernschicht kann aus einzelnen, aneinander angrenzenden Wärmedämmpaneelen oder einem Wärmedämmmaterial in Form von Schüttgut ausgebildet sein, welches zwischen die Außenschichten eingefüllt ist. Bei dem wärmedämmenden Material kann es sich beispielsweise um Polystyrol, insbesondere expandiertes Polystyrol, Mineralwolle, Polyurethan, oder um ein Aerogel auf insbesondere Silikatbasis handeln. Um die Wärmeleitfähigkeit dieses Aerogels zu verringern, kann das Aerogel von einer vakuumdichten Folie umgeben und ein in dem Aerogel enthaltener Luftanteil durch Evakuierung unter Ausbildung eines Vakuumdämmpaneels entzogen worden sein. Die Außenschichten können aus Metall, einer Metalllegierung oder Kunststoff ausgebildet sind. Das Schleusentor, insbesondere dessen Kernschicht kann neben dem wärmedämmenden Material auch das Antriebsmittel und/oder die Kommunikationseinheit umfassen. Im diesem Fall umfasst die Kernschicht also das wärmedämmende Material sowie das Antriebsmittel und/oder die Kommunikationseinheit.

Ein weiterer Aspekt der Erfindung sieht ein Verfahren zum Anliefern eines Pakets mit einem unbemannten Flugzeug, insbesondere einer Logistikdrohne, und zum Schleusen des Pakets durch eine Paketschleuse vor. Die Paketschleuse kann in eine Außenwand eines Gebäudes oder in eine Umwehrung eines Balkons, insbesondere eine Balkonbrüstung oder ein Balkongeländer integriert sein. Im erstgenannten Fall handelt es sich bei dem Verfahren vorzugsweise um ein Verfahren zum Anliefern eines Pakets mit einem unbemannten Flugzeug, insbesondere einer Logistikdrohne, und zum Schleusen des Pakets durch eine Paketschleuse einer Außenwand. Im zweitgenannten Fall handelt es sich bei dem Verfahren vorzugsweise um ein Verfahren zum Anliefern des Pakets mit einem unbemannten Flugzeug, insbesondere einer Logistikthrone, und zum Schleusen des Pakets durch eine Paketschleuse einer Balkonumwehrung.

Gemäß dem erfindungsgemäßen Verfahren fliegt in einem Verfahrensschritt (a) ein unbemanntes Flugzeug, insbesondere eine Logistikdrohne zu einer Paketschleuse, wobei das unbemannte Flugzeug mit einem Paket beladen ist, und übermittelt in einem Verfahrensschritt (b) einen digitalen Anlieferungshinweis an eine Kommunikationseinheit der Paketschleuse. Dadurch wird die Paketschleuse darüber in Kenntnis gesetzt, dass die Anlieferung eines Pakets bevorsteht. Die Paketschleuse übermittelt daraufhin in einem Verfahrensschritt (c) ihre Positionsdaten in Form von beispielsweise GPS-Daten, Daten zu ihrer relativen Höhe, Daten zur eindeutigen Schleusentoridentifikation oder dergleichen durch die Kommunikationseinheit an das unbemannte Flugzeug, wodurch das unbemannte Flugzeug die exakte Position der Paketschleuse kennt. Der Begriff "exakte Position" bedeutet in diesem Zusammenhang, dass das unbemannte Flugzeug in die Lage versetzt wird, die Paketablagefläche anzusteuern und dort das Paket abzuliefern, ohne dass diese dabei beispielsweise abstürzt. Dies ermöglicht eine Anlieferung von Paketen nicht nur an Einfamilienhäuser, sondern auch an Wohnungen in Mehrfamilienhäusern und an Büroräume in mehrgeschossigen Bürogebäuden. In einem nächsten Schritt (d) wird ein Schleusentor der Paketschleuse von einem geschlossenen Zustand in einen geöffneten Zustand durch ein Antriebsmittel der Paketschleuse überführt, wodurch ein Durchlass eines Grundkörpers der Paketschleuse zum Schleusen des Pakets durch den Durchlass freigegeben wird. Entweder nach diesem Verfahrensschritt (d) oder gleichzeitig mit diesem Verfahrensschritt (d) steuert das unbemannte Flugzeug in einem Verfahrensschritt (e) eine auf einer ersten Seite des Grundkörpers angeordnete Paketablagefläche der Paketschleuse anhand der übermittelten Positionsdaten an. Danach erfolgt in einem Verfahrensschritt (f) die Ablage des Pakets auf der Paketablagefläche durch das unbemannte Flugzeug. Nachdem das Paket von dem unbemannten Flugzeug abgelegt wurde, wird das Paket in einem Verfahrensschritt (g) von der ersten Seite des Grundkörpers durch den Durchlass auf eine zweite Seite des Grundkörpers geschleust. In Abhängigkeit davon, ob die Paketschleuse Bestandteil einer Außenwand oder einer Balkonumwehrung ist, wird das Paket in dem Verfahrensschritt (g) in einen Gebäudeinnenbereich oder einen Balkoninnenbereich geschleust bzw. befördert, die auf der zweiten Seite des Grundkörpers der Paketschleuse liegen. Nachdem nun das Paket angeliefert und durch die Paketschleuse geschleust wurde, wird das Schleusentor der Paketschleuse in einem Verfahrensschritt (h) von dem geöffneten Zustand in den geschlossenen Zustand durch das Antriebsmittel der Paketschleuse überführt, wodurch der Durchlass des Grundkörpers der Paketschleuse wieder verschlossen wird.

Neben der Anlieferung von Paketen können Pakete von dem unbemannten Flugzeug auch abgeholt werden. Hierzu fliegt das unbemannte Flugzeug, insbesondere die Logistikdrohne zu der Paketschleuse, wobei das unbemannte Flugzeug noch unbeladen ist, und übermittelt einen digitalen Abholungshinweis an die Kommunikationseinheit der Paketschleuse. Dadurch wird die Paketschleuse darüber in Kenntnis gesetzt, dass die Abholung eines Pakets bevorsteht. Die Paketschleuse übermittelt daraufhin ihre Positionsdaten durch die Kommunikationseinheit an das unbemannte Flugzeug, wodurch das unbemannte Flugzeug die exakte Position der Paketschleuse kennt. Dies ermöglicht eine Abholung von Paketen nicht nur von Einfamilienhäusern, sondern auch von Wohnungen in Mehrfamilienhäusern und Büroräumen in mehrgeschossigen Bürogebäuden. In einem nächsten Schritt wird das Schleusentor der Paketschleuse von dem geschlossenen Zustand in den geöffneten Zustand durch das Antriebsmittel der Paketschleuse überführt, wodurch der Durchlass des Grundkörpers der Paketschleuse zum Schleusen des Pakets durch den Durchlass freigegeben wird. Nachdem der Durchlass des Grundkörpers der Paketschleuse zum Schleusen des Pakets durch den Durchlass freigegeben ist, wird das Paket von der zweiten Seite des Grundkörpers durch den Durchlass auf die erste Seite des Grundkörpers geschleust. In Abhängigkeit davon, ob die Paketschleuse Bestandteil einer Außenwand oder einer Balkonumwehrung ist, wird das Paket in diesem Verfahrensschritt von einem Gebäudeinnenbereich oder einem Balkoninnenbereich auf einen Gebäudeaußenbereich oder einem Balkonaußenbereich geschleust bzw. befördert. Entweder nach diesem Verfahrensschritt oder gleichzeitig mit diesem Verfahrensschritt steuert das unbemannte Flugzeug die auf der ersten Seite des Grundkörpers angeordnete Paketablagefläche der Paketschleuse anhand der übermittelten Positionsdaten an. Danach erfolgt die Aufnahme des Pakets von der Paketablagefläche durch das unbemannte Flugzeug und das unbemannte Flugzeug fliegt gemeinsam mit dem Paket zu einem Logistikzentrum oder direkt zu einem Empfänger. Nachdem nun das Paket abgeholt wurde, wird das Schleusentor der Paketschleuse von dem geöffneten Zustand in den geschlossenen Zustand durch das Antriebsmittel der Paketschleuse überführt, wodurch der Durchlass des Grundkörpers der Paketschleuse wieder verschlossen wird.

In einer vorteilhaften Ausgestaltung der erfindungsgemäßen Paketschleuse umfasst diese Paketschleuse ein auf der zweiten Seite des Grundkörpers angeordnetes Aufnahmeelement für das Paket. Nachdem das Paket von der ersten Seite des Grundkörpers durch den Durchlass auf die zweite Seite des Grundkörpers geschleust wurde, kann das Paket von diesem Aufnahmeelement aufgenommen und bis zur Entnahme durch den Empfänger gelagert werden. Dieses Aufnahmeelement ist vorzugsweise ein Auffangnetz, eine Box, insbesondere eine Thermobox, oder ein Kühlschrank. In einer vorteilhaften Weiterbildung des erfindungsgemäßen Verfahrens wird das Paket nach dem Verfahrensschritt (g) von diesem auf der zweiten Seite des Grundkörpers angeordneten Paketaufnahmeelement der Paketschleuse aufgenommen, welches vorzugsweise ein Auffangnetz, eine Box, insbesondere eine Thermobox, oder ein Kühlschrank ist. Sofern das Aufnahmeelement als Thermobox oder Kühlschrank ausgebildet ist, können in dem Paket angelieferte Lebensmittel kalt oder warm gelagert und vor einem Verderben geschützt werden. Dieses Aufnahmeelement kann entweder direkt an den Durchlass auf der zweiten Seite des Grundkörpers angeschlossen oder über ein automatisches Zuführsystem verbunden sein.

Damit das angelieferte oder abzuholende Paket automatisch durch den Durchlass geschleust werden kann, kann die Paketablagefläche ein Förderelement, insbesondere ein Förderband aufweisen, welches dazu ausgebildet ist, das Paket von der ersten zur zweiten Seite des Grundkörpers oder in umgekehrter Richtung zu befördern. In einer weiteren vorteilhaften Weiterbildung des erfindungsgemäßen Verfahrens wird das Paket in Verfahrensschritt (g) von diesem Förderelement von der ersten Seite des Grundkörpers durch den Durchlass auf die zweite Seite des Grundkörpers befördert, vorzugsweise in das Paketaufnahmeelement.

Das unbemannte Flugzeug kann batteriebetrieben sein. Da die derzeitig auf dem Markt erhältlichen wiederaufladbaren Batteriezellen eine nur geringe Flugreichweite des unbemannten Flugzeugs ermöglichen, sieht eine weitere vorteilhafte Ausgestaltung der erfindungsgemäßen Paketschleuse vor, dass die Paketablagefläche eine Ladeeinrichtung zum elektrischen Laden von wiederaufladbaren Batteriezellen des unbemannten Flugzeugs aufweist. In einer weiteren vorteilhaften Weiterbildung des erfindungsgemäßen Verfahrens werden die wiederaufladbaren Batteriezellen des unbemannten Flugzeugs während oder nach dem Verfahrensschritt (f) von einer Ladeeinrichtung der Paketablagefläche elektrisch geladen. Dieses elektrische Laden kann kontaktlos, das heißt induktiv erfolgen, wodurch elektrische Energie berührungslos von der Ladeeinrichtung auf die wiederaufladbaren Batteriezellen des unbemannten Flugzeugs übertragen wird. Dies ermöglicht ein schnelles Aufladen der wiederaufladbaren Batteriezellen des unbemannten Flugzeugs, wodurch das unbemannte Flugzeug auch weite Flugstrecken zwischen dem Empfänger und dem Logistikzentrum überwinden kann.

Um eine ausreichende Stabilität der Paketschleuse in ihrem Einbauzustand in der Außenwand des Gebäudes oder der Umwehrung des Balkons zu gewährleisten, sieht eine weitere vorteilhaften Ausgestaltung der erfindungsgemäßen Paketschleuse vor, dass der Grundkörper als Rahmen ausgebildet ist, der zwei beabstandet zueinander angeordnete Vertikalschenkel und zwei beabstandet zueinander angeordnete Horizontalschenkel aufweist, wobei die Vertikalschenkel und die Horizontalschenkel den Durchlass im Wesentlichen umschließen. Der als Rahmen ausgebildete Grundkörper ist vorzugsweise im Wesentlichen rechteckig ausgebildet. Damit der Grundkörper im Einbauzustand der Paketschleuse in einer Außenwand diese Außenwand von ihrer Wandinnenseite zu ihrer Wandaußenseite durchqueren kann, kann eine Rahmentiefe T des Grundkörpers im Wesentlichen einer Wandstärke D der Außenwand entsprechen. Weist die Außenwand eine Wandstärke D, gemessen von ihrer Wandinnenseite zu ihrer Wandaußenseite, von beispielsweise 37 cm auf, dann kann die Grundkörper ebenfalls eine Rahmentiefe T von 37 cm aufweisen. Es liegt aber auch im Rahmen der Erfindung, dass die Rahmentiefe T des Grundkörpers größer als die Wandstärke D der Außenwand sein kann. In diesem Fall steht der Grundkörper beidseitig, d.h. über die Wandinnenseite in Richtung des Gebäudeinnenbereichs und die Wandaußenseite in Richtung einer Gebäudeumgebung hervor. Im eingebauten Zustand der Paketschleuse in der Außenwand kann zumindest ein Kraftübertragungselement an den Vertikalschenkeln und/oder den Horizontalschenkeln auf ihrer dem Durchlass des Grundkörpers abgewandten Seite festgelegt sein, das eine Verankerung des als Rahmen ausgebildeten Grundkörpers in der Außenwand ermöglichen. Dieses Kraftübertragungselement kann beispielsweise ein stabförmiges Bewehrungselement aus Betonstahl, Edelstahl oder glasfaserverstärktem Kunststoff sein.

Eine weitere vorteilhafte Ausgestaltung der erfindungsgemäßen Paketschleuse sieht vor, dass das Schleusentor ein zumindest einteiliges Schiebetor ist, welches an dem Grundkörper schiebbar angeordnet und zur Überführung in den geschlossenen Zustand vor den Durchlass sowie in umgekehrter Richtung schiebbar ist. Das schiebbare Schleusentor kann - wie bereits zuvor erwähnt - auf der ersten Seite oder der zweiten Seite des Grundkörpers angeordnet sein. Der Grundkörper kann zumindest eine Führungsschiene aufweisen, der entlang das Schiebetor zur Überführung der Paketschleuse in den geschlossenen Zustand vor den Durchlass und zur Überführung der Paketschleuse in den geöffneten Zustand von dem Durchlass weg schiebbar ist. Sofern der Grundkörper als Rahmen ausgebildet ist, kann die Führungsschiene auf einer dem Durchlass abgewandten Seite eines ersten Horizontalschenkels angeordnet sein, wobei dieser erste Horizontalschenkel im Einbauzustand der Paketschleuse dem unteren Horizontalschenkel des Rahmens entspricht.

Alternativ hierzu ist das Schleusentor in einer weiteren vorteilhaften Ausgestaltung der erfindungsgemäßen Paketschleuse eine schwenkbare Klappe, die um eine Achse schwenkbar an dem Grundkörper der Paketschleuse angeordnet ist. Vorzugsweise ist die schwenkbare Klappe um die Achse in Richtung der ersten Seite des Grundkörpers schwenkbar an dem Grundkörper angeordnet, wobei die Paketablagefläche im geschlossenen Zustand des Schleusentors auf einer dem Durchlass zugewandten Seite der Klappe angeordnet ist. Die Klappe kann zur Überführung des Schleusentors von seinem geschlossenen Zustand in seinen geöffneten Zustand vorzugsweise um 90° um die Achse geschwenkt werden. Ist das Schleusentor auf der ersten Seite des Grundkörpers angeordnet, so ist es im Einbauzustand der Paketschleuse nach dem Schwenken um 90° um die Achse im Wesentlichen senkrecht zur Wandaußenseite oder zu einem vertikal stehenden Umwehrungselement ausgerichtet. In diesem Fall ist die Paketablagefläche folglich auf einer Oberseite der Klappe angeordnet, sodass das Paket von dem unbemannten Flugzeug auf der auf der Oberseite der Klappe angeordneten Paketablagefläche abgelegt oder von der auf der Oberseite der Klappe angeordneten Paketablagefläche aufgenommen werden kann.

Weiterhin kann die Paketschleuse eine zumindest einteilig ausgebildete Schublade aufweisen, die in Richtung der ersten Seite des Grundkörpers ausfahrbar ist, wobei die Paketablagefläche auf einer dem Durchlass zugewandten Seite der Schublade angeordnet ist. Auch in diesem Fall ist die Paketablagefläche folglich auf einer Oberseite der Schublade angeordnet, sodass das Paket von dem unbemannten Flugzeug auf der auf der Oberseite der Schublade angeordneten Paketablagefläche abgelegt oder von der auf der Oberseite der Schublade angeordneten Paketablagefläche aufgenommen werden kann. Diese Schublade kann insbesondere dann vorgesehen sein, wenn das Schleusentor ein Schiebetor ist und daher keine Paketablagefläche aufweisen kann. Sofern der Grundkörper als Rahmen ausgebildet ist, kann die Schublade auf einer dem Durchlass abgewandten Seite des ersten Horizontalschenkels angeordnet sein. Damit die Schublade in ihrem nicht-ausgezogenen bzw. nicht-ausgefahren Zustand und im Einbauzustand der Paketschleuse zwischen der Wandinnenseite und der Wandaußenseite aufbewahrt werden kann, kann die Paketschleuse ein Paketaufnahmeelement umfassen, das vorzugsweise auf einer dem Durchlass abgewandten Seite des ersten Horizontalschenkels des Grundkörpers angeordnet ist.

Es kann weiterhin vorgesehen sein, dass die Schublade in ihrem ausgefahrenen Zustand eine größere Abmessung wie der erste Horizontalschenkel des als Rahmen ausgebildeten Grundkörpers aufweisen und dennoch in ihrem nicht-ausgezogenen bzw. nicht-ausgefahrenen Zustand in dem zuvor genannten Paketaufnahmeelement aufbewahrt werden kann. Um dies zu verwirklichen, sieht eine weitere vorteilhafte Ausgestaltung der erfindungsgemäßen Paketschleuse vor, dass ein Schubladenboden der Schublade mehrteilig ausgebildet ist, sodass die Schublade teleskopartig in Richtung der ersten Seite des Grundkörpers ausfahrbar ist. Dieser Schubladenboden weist vorzugsweise die Paketablagefläche auf.

Um den Aufbau des Schleusentors zu vereinfachen, ist das Schleusentor in einer weiteren vorteilhaften Ausgestaltung der erfindungsgemäßen Paketschleuse eine Schubladenstirnwand der Schublade. Diese Schubladenstirnwand ist im Wesentlichen senkrecht zu dem Schubladenboden auf einer dem Durchlass abgewandten Seite der Schublade angeordnet, wobei die Schubladenstirnwand den Durchlass im geschlossenen Zustand des Schleusentors im Wesentlichen vollständig verschließt. Dadurch kann auf ein zusätzliches Schleusentor in Form einer schwenkbaren Klappe oder eines Schiebetors verzichtet werden.

Ein dritter Aspekt der Erfindung betrifft eine Außenwand eines Gebäudes. Diese Außenwand umfasst erfindungsgemäß eine zu einer Gebäudeinnenseite hin ausgerichtete Wandinnenseite, eine zu einer Gebäudeaußenseite hin ausgerichtete Wandaußenseite, einen Wandkörper, eine Wanddämmung und eine Paketschleuse nach einem der Ansprüche 1 bis 16. Bei dieser Außenwand durchquert ein Grundkörper mit zumindest einem Durchlass der Paketschleuse die Außenwand von der Wandinnenseite zur Wandaußenseite. Die zuvor beschriebene erste Seite des Grundkörpers ist auf der Wandaußenseite der Außenwand des Gebäudes und die zweite Seite des Grundkörpers der Wandinnenseite angeordnet. Der Wandkörper kann beispielsweise gemauert, aus einem Betonfertigteil ausgebildet oder in Leichtbauweise erstellt sein. Die Wanddämmung kann auch in einen Innenbereich des Wandkörpers integriert sein.

Ein vierter Aspekt der Erfindung betrifft eine Umwehrung, insbesondere ein Geländer oder eine Brüstung, für einen Balkon eines Gebäudes. Diese Umwehrung umfasst zumindest ein vertikal stehendes Umwehrungselement, eine zu einer Gebäudeseite hin ausgerichtete Umwehrungsinnenseite des Umwehrungselements, eine der Umwehrungsinnenseite gegenüberliegende Umwehrungsaußenseite des Umwehrungselements und eine Paketschleuse nach einem der Ansprüche 1 bis 16, wobei ein Grundkörper mit zumindest einem Durchlass der Paketschleuse das vertikal stehende Umwehrungselement von der Umwehrungsaußenseite zur Umwehrungsinnenseite durchquert. Bei dem vertikal stehenden Umwehrungselement kann es sich um ein gemauertes Brüstungsteil, ein in Leichtbauweise erstelltes Brüstungsteil oder ein Geländerelement aus Metall, einer Metalllegierung oder Kunststoff handeln.

Weitere Merkmale oder Vorteile der vorliegenden Erfindung ergeben sich aus der nachfolgenden Beschreibung von Ausführungsbeispielen anhand der Zeichnungen; hierbei zeigen
- Figur 1: ein erstes Ausführungsbeispiel einer erfindungsgemäßen Paketschleuse in perspektivischer Darstellung von vorne;
- Figur 2: das erste Ausführungsbeispiel der erfindungsgemäßen Paketschleuse in Seitenansicht;
- Figur 3: ein zweites Ausführungsbeispiel einer erfindungsgemäßen Paketschleuse in Seitenansicht;
- Figur 4: ein drittes Ausführungsbeispiel einer erfindungsgemäßen Paketschleuse in perspektivischer Darstellung von vorne;
- Figur 5: das dritte Ausführungsbeispiel der erfindungsgemäßen Paketschleuse in Seitenansicht;
- Figur 6: ein viertes Ausführungsbeispiel einer erfindungsgemäßen Paketschleuse in perspektivischer Darstellung von vorne;
- Figur 7: ein erstes Ausführungsbeispiel einer erfindungsgemäßen Außenwand in Querschnittsdarstellung, die das erste Ausführungsbeispiel der erfindungsgemäßen Paketschleuse aus den Figuren 1 und 2 umfasst; und
- Figur 8: ein zweites Ausführungsbeispiel einer erfindungsgemäßen Außenwand in Querschnittsdarstellung, die das dritte Ausführungsbeispiel der erfindungsgemäßen Paketschleuse aus den Figuren 4 und 5 umfasst.

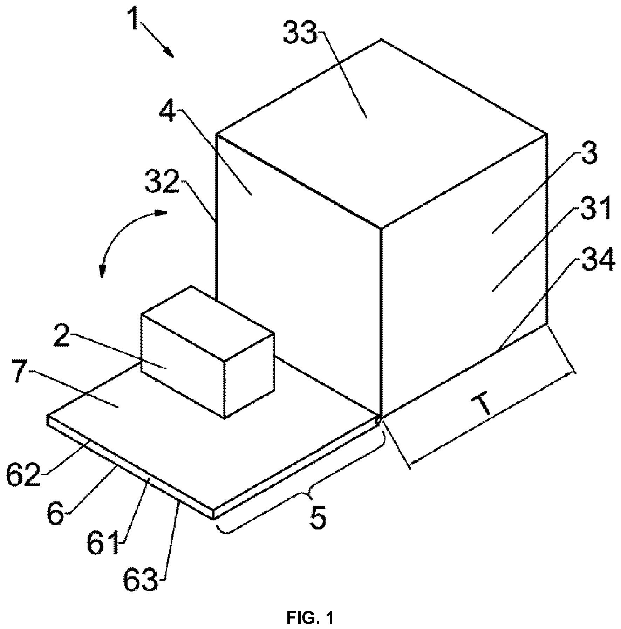

Figur 1 zeigt ein erstes Ausführungsbeispiel einer erfindungsgemäßen Paketschleuse 1 für eine Außenwand eines Gebäudes oder eine Umwehrung eines Balkons in perspektivischer Darstellung von vorne, die zur automatischen Anlieferung und Abholung eines Pakets 2 mittels eines unbemannten Flugzeugs, insbesondere einer Logistikdrohne dient. Diese Paketschleuse 1 umfasst einen Grundkörper 3 mit einem Durchlass 4 für das Paket 2 und einer ersten Seite 5 für die Anlieferung oder Abholung des Pakets 2. Der Grundkörper 3 ist als rechteckiger Rahmen ausgebildet, der zwei beabstandet zueinander angeordnete Vertikalschenkel 31, 32 und zwei beabstandet zueinander angeordnete Horizontalschenkel 33, 34 aufweist. Diese Vertikalschenkel 31, 32 und Horizontalschenkel 33, 34 umschließen den Durchlass 4. Der Rahmen 3 ist im vorliegenden Ausführungsbeispiel als Spritzgussformteil aus Kunststoff ausgebildet und weist eine Rahmentiefe T von 37 cm auf. Damit eignet sich dieser Rahmen 3 zum Einbau in eine Außenwand eines Gebäudes, die eine Wandstärke D von 37 cm aufweist. Weiterhin umfasst das erste Ausführungsbeispiel der erfindungsgemäßen Paketschleuse 1 ein Schleusentor 6, welches an dem Grundkörper 3 bewegbar angeordnet ist. Dieses Schleusentor 6 ist im vorliegenden ersten Ausführungsbeispiel eine schwenkbare Klappe, die um eine Achse schwenkbar an einem ersten Horizontalschenkel 34 des Grundkörpers 3 angeordnet ist. Diese schwenkbare Klappe 6 verschließt den Durchlass 4 im geschlossenen Zustand im Wesentlichen vollständig und gibt den Durchlass 4 im geöffneten Zustand zum Schleusen des Pakets durch den Durchlass 4 frei. Die Paketschleuse 1 umfasst weiterhin ein in Figur 1 nicht dargestelltes Antriebsmittel. Dieses Antriebsmittel wirkt mit der schwenkbaren Klappe 6 derart zusammen, dass es die schwenkbare Klappe 6 von dem geschlossenen Zustand in den geöffneten Zustand und in umgekehrter Richtung überführt und folglich den Durchlass 4 für das Durchschleusen von Paketen 2 freigibt oder verschließt. Um eine Wärmebrücke im Bereich des Durchlasses 4 zu vermeiden, weist die schwenkbare Klappe 6 eine Schichtstruktur mit einer Kernschicht 61 aus wärmedämmendem Material und zwei die Kernschicht 61 jeweils einseitig begrenzende Außenschichten 62, 63 aus Edelstahl auf. Bei dem wärmedämmenden Material handelt es sich in diesem ersten Ausführungsbeispiel der Paketschleuse 1 um ein Vakuumdämmpaneel, das ein Aerogel auf Silikatbasis enthält, aus welchem die Luft durch Evakuierung entzogen wurde. Neben dem Vakuumdämmpaneel umfasst die Kernschicht 61 auch noch das Antriebsmittel, das somit ebenfalls zwischen den Außenschichten 62, 63 angeordnet ist. Die Paketschleuse 1 umfasst weiterhin eine Paketablagefläche 7, die im geöffneten Zustand des Schleusentors 6 auf der ersten Seite 5 des Grundkörpers 3 und im geschlossenen Zustand des Schleusentors 6 auf einer dem Durchlass 4 zugewandten Seite der schwenkbaren Klappe 6 angeordnet ist. Auf dieser Paketablagefläche 7 liegt das Paket 2, das von dem unbemannten Flugzeug angeliefert wurde. Weiterhin weist die Paketschleuse 1 eine in Figur 1 nicht gezeigte Kommunikationseinheit auf, die dazu ausgebildet ist, mit dem unbemannten Flugzeug bei der Anlieferung oder Abholung des Pakets 2 kontaktlos zu kommunizieren. Neben dem Vakuumdämmpaneel und dem Antriebsmittel umfasst die Kernschicht 61 auch noch die Kommunikationseinheit, die somit ebenfalls zwischen den Außenschichten 62, 63 angeordnet ist.

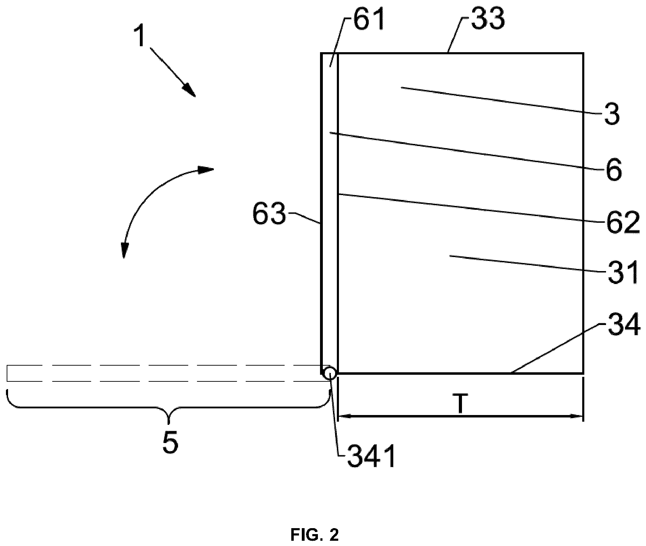

Figur 2 zeigt das erste Ausführungsbeispiel der erfindungsgemäßen Paketschleuse 1 aus Figur 1 in Seitenansicht, wobei das Schleusentor 6 in seinem geschlossenen Zustand vorliegt und daher den Durchlass 4 vollständig verschließt. Wie bereits zuvor erwähnt, ist dieses Schleusentor 6 als schwenkbare Klappe ausgebildet. Diese Klappe 6 ist um eine Achse in Richtung der ersten Seite 5 des Grundkörpers 3 um 90 Grad [°] schwenkbar an dem ersten Horizontalschenkel 34 angeordnet, wobei sie durch das Schwenken den Durchlass 4 freigibt. Die Schwenkrichtung ist in Figur 2 durch den darin enthaltenen Pfeil und der geöffnete Zustand des Schleusentors 6 durch die gestrichelt dargestellte Position der Klappe 6 angedeutet. Damit die Klappe 6 um die Achse geschwenkt werden kann, weist der erste Horizontalschenkel 34 des Grundkörpers 3 ein Scharnier 341 auf, das auf einer der ersten Seite 5 des Grundkörpers zugewandten Seite des ersten Vertikalschenkels 34 angeordnet ist.

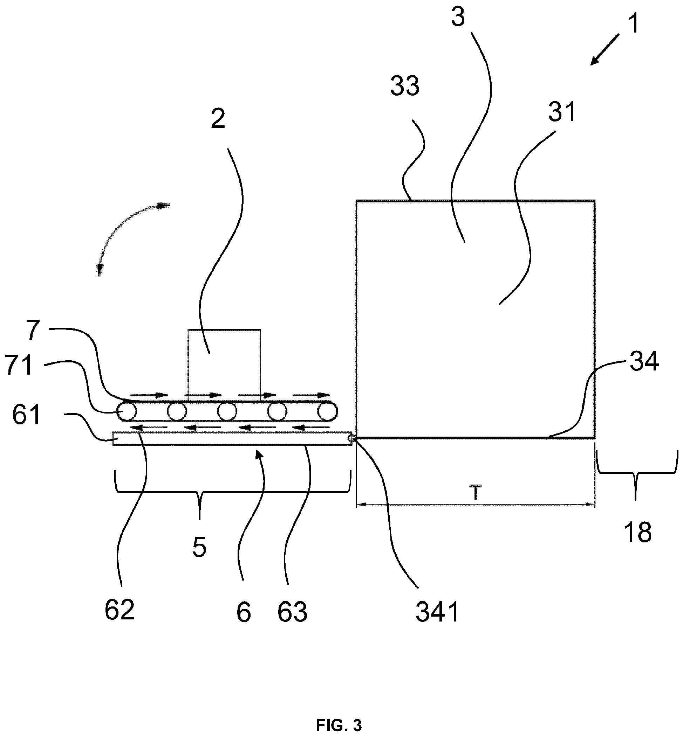

Figur 3 zeigt ein zweites Ausführungsbeispiel der erfindungsgemäßen Paketschleuse 1 in Seitenansicht. Dieses zweite Ausführungsbeispiel unterscheidet sich von dem in den Figuren 1 und 2 gezeigten ersten Ausführungsbeispiel dadurch, dass die Paketablagefläche 7 der Paketschleuse 1 ein Förderelement 71 in Form eines Förderbandes aufweist. Dieses Förderband 71 ist dazu ausgebildet, das Paket 2 nach seiner Anlieferung von der ersten Seite 5 zur zweiten Seite 18 des Grundkörpers 3 zu befördern (Bewegungsrichtung ist in Figur 3 durch horizontale Pfeile angedeutet). Bei der Abholung eines Pakets 2 kann das Förderband 71 das Paket 2 auch in umgekehrter Richtung, also von der zweiten Seite 18 zur ersten Seite 5 des Grundkörpers 3 befördern.

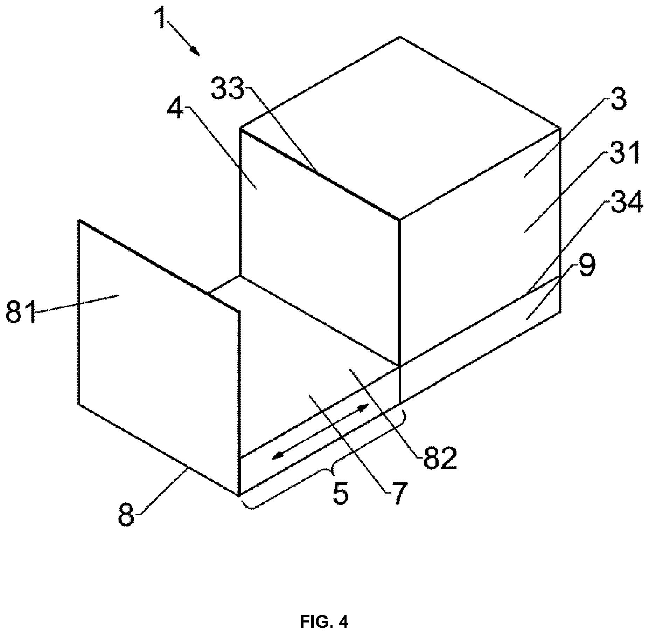

Figur 4 zeigt ein drittes Ausführungsbeispiel der erfindungsgemäßen Paketschleuse 1 in perspektivischer Darstellung von vorne. Dieses dritte Ausführungsbeispiel unterscheidet sich von dem in den Figuren 1 und 2 gezeigten ersten Ausführungsbeispiel dadurch, dass die Paketschleuse 1 eine einteilig ausgebildete Schublade 8 aufweist, die in Richtung der ersten Seite 5 des Grundkörpers 3 ausfahrbar ist, wobei die Paketablagefläche 7 auf einer dem Durchlass 4 zugewandten Seite dieser Schublade 8 angeordnet ist. Die Ausfahrrichtung der Schublade 8 ist durch den in Figur 3 gezeigten Doppelpfeil angedeutet. Das Schleusentor dieser Paketschleuse 1 ist eine Schubladenstirnwand 81 der Schublade 8, welche senkrecht zu einem Schubladenboden 82 der Schublade 8 angeordnet ist, wobei die Schubladenstirnwand 81 den Durchlass 4 im in Figur 3 nicht-dargestellten, geschlossenen Zustand des Schleusentors 81 im Wesentlichen vollständig verschließt. Hierfür weisen der Durchlass 4 und die Schubladenstirnwand 81 dieselbe Abmessung auf. Auch diese Schubladenstirnwand 83 weist die zuvor beschriebene Schichtstruktur auf, um eine Wärmebrücke im Bereich des Durchlasses 4 zu vermeiden. Auf einer dem Durchlass 4 abgewandten Seite des ersten Vertikalschenkels 34 weist die Paketschleuse 1 ein Schubladenaufnahmeelement 9 auf. Zur Überführung des Schleusentors bzw. der Schubladenstirnwand 81 vom geöffneten in den geschlossenen Zustand wird der Schubladenboden 82 und damit auch die Paketablagefläche 7 in das Schubladenaufnahmeelement 9 eingeschoben. Mit anderen Worten ist die Paketablagefläche 7 nur im geöffneten Zustand des Schleusentors bzw. der Schubladenstirnwand 81 und damit nicht im geschlossenen Zustand des Schleusentors bzw. der Schubladenstirnwand 81 auf der ersten Seite 5 des Grundkörpers 3 angeordnet.

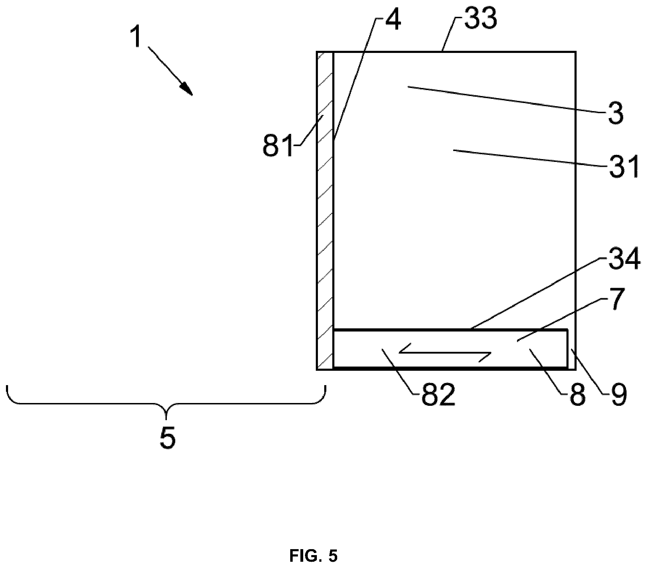

Figur 5 zeigt das dritte Ausführungsbeispiel der erfindungsgemäßen Paketschleuse 1 aus Figur 4 in Seitenansicht, wobei das Schleusentor 8 in seinem geschlossenen Zustand vorliegt, sodass die Schubladenstirnwand 83 den Durchlass 4 vollständig verschließt und der der Schubladenboden 82 in das das Schubladenaufnahmeelement 9 eingeschoben ist.

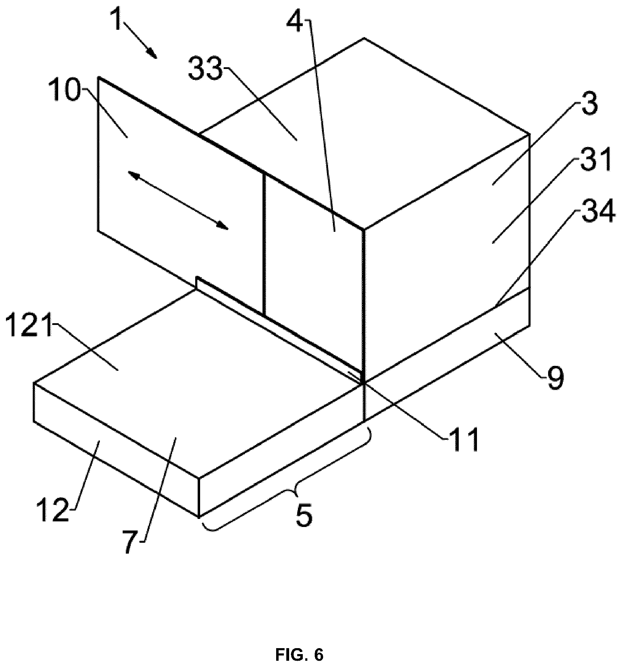

Figur 6 zeigt ein viertes Ausführungsbeispiel der erfindungsgemäßen Paketschleuse 1 in perspektivischer Darstellung von vorne. Dieses vierte Ausführungsbeispiel unterscheidet sich von dem in den Figuren 4 und 5 gezeigten dritten Ausführungsbeispiel dadurch, dass das Schleusentor ein einteiliges Schiebetor 10 ist, das zur Überführung in den geschlossenen Zustand vor den Durchlass 4 schiebbar ist. Die Richtungen, in der das Schiebetor schiebbar ist, ist in Figur 6 durch einen Doppelpfeil angegeben. Trotz dieses Schiebetors 10 weist die Paketschleuse 1 auch eine Schublade 12 auf. Allerdings weist diese Schublade 12 im Gegensatz zu der in den Figuren 3 und 4 gezeigten Schublade 8 keine als Schleusentor ausgebildete Schubladenstirnwand auf, sondern nur den Schubladenboden 121. Auf der Oberseite dieses Schubladenbodens 121 ist die Paketablagefläche 7 angeordnet. Weiterhin weist der erste Horizontalschenkel 34 des Grundkörpers 3 eine Führungsschiene 11 auf, der entlang das Schiebetor 10 zur Überführung des Schiebetors 10 in den geschlossenen Zustand vor den Durchlass 4 schiebbar ist.

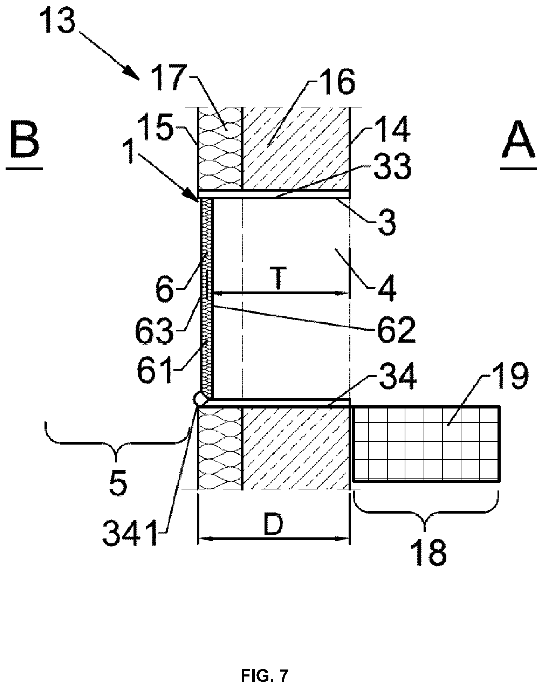

Figur 7 zeigt ein erstes Ausführungsbeispiel einer erfindungsgemäßen Außenwand 13 in Querschnittsdarstellung, die das erste Ausführungsbeispiel der erfindungsgemäßen Paketschleuse 1 aus den Figuren 1 und 2 umfasst. Diese Außenwand 13 weist weiterhin eine zu einer Gebäudeinnenseite A hin ausgerichtete Wandinnenseite 14, eine zu einer Gebäudeaußenseite B hin ausgerichtete Wandaußenseite 15, einen im Bereich der Wandinnenseite 14 angeordneten Wandkörper 16 und eine im Bereich der Wandaußenseite 15 angeordnete Wanddämmung 17 auf. Die Paketschleuse 1 ist dabei derart in die Außenwand 13 integriert, dass ihr Grundkörper 3 die Außenwand 13 von der Wandinnenseite 14 zur Wandaußenseite 15 durchquert, also den Wandkörper 16 und die Wanddämmung 17. Das erste Ausführungsbeispiel der Paketschleuse 1 weist ein auf einer zweiten Seite 18 des Grundkörpers 3 angeordnetes Aufnahmeelement in Form eines Auffangnetzes 19 für das Paket 2 auf.

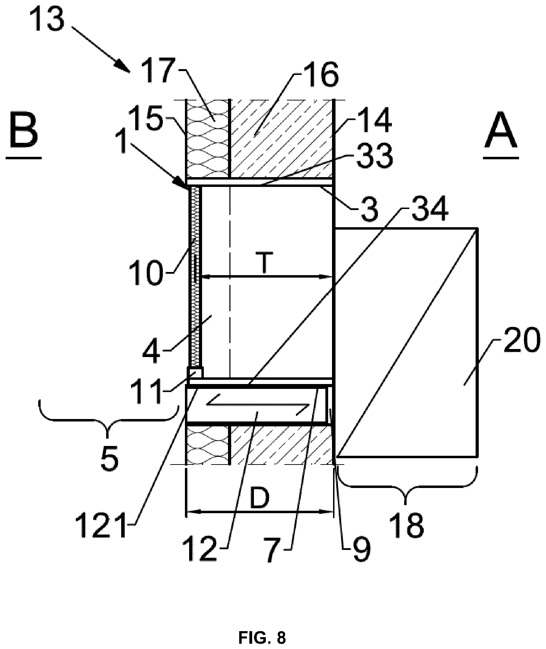

Figur 8 zeigt ein zweites Ausführungsbeispiel einer erfindungsgemäßen Außenwand 13 in Querschnittsdarstellung. Dieses zweite Ausführungsbeispiel der Außenwand 13 unterscheidet sich von dem in Figur 7 gezeigten ersten Ausführungsbeispiel dadurch, dass das zweite Ausführungsbeispiel der Außenwand 13 das vierte Ausführungsbeispiel der erfindungsgemäßen Paketschleuse 1 aus Figur 6 umfasst. Das Schleusentor in Form des Schiebetors 10 befindet sich in Figur 8 in seinem geschlossenen Zustand, sodass der Durchlass 4 verschlossen ist. Ein weiterer Unterschied zwischen dem ersten und zweiten Ausführungsbeispiel der Außenwand 13 besteht darin, dass das Aufnahmeelement für das Paket 2 in dem zweiten Ausführungsbeispiel der Außenwand 13 als Thermobox 20 ausgebildet ist.

## Patentansprüche

1. Paketschleuse (1) für eine Außenwand (13) eines Gebäudes oder eine Umwehrung eines Balkons, die zur automatischen Anlieferung und Abholung eines Pakets (2) mittels eines unbemannten Flugzeugs, insbesondere einer Logistikdrohne dient, umfassend
- einen Grundkörper (3) mit zumindest einem Durchlass (4) für das Paket (2), einer ersten Seite (5) für die Anlieferung oder Abholung des Pakets und einer der ersten Seite (5) gegenüberliegenden zweiten Seite (18) für eine Lagerung des Pakets (2),
- ein Schleusentor (6, 81, 10), welches an dem Grundkörper (3) bewegbar angeordnet ist, wobei das Schleusentor (6, 81, 10) den Durchlass (4) in seinem geschlossenen Zustand im Wesentlichen vollständig verschließt und in seinem geöffneten Zustand zum Schleusen des Pakets (2) durch den Durchlass (4) freigibt,
- eine Paketablagefläche (7), die zumindest im geöffneten Zustand des Schleusentors (6, 81, 10) auf der ersten Seite (5) des Grundkörpers (3) angeordnet ist,
- ein Antriebsmittel, das dazu ausgebildet ist, das Schleusentor (6, 81, 10) von dem geschlossenen Zustand in den geöffneten Zustand und in umgekehrter Richtung zu überführen, und
- eine Kommunikationseinheit, die dazu ausgebildet ist, mit dem unbemannten Flugzeug bei der Anlieferung und Abholung des Pakets (2) kontaktlos zu kommunizieren, und mit dem Antriebsmittel informationsleitend verbunden ist, wodurch das Schleusentor (6, 81, 10) bei der Anlieferung oder Abholung des Pakets (2) von dem geschlossenen Zustand in den geöffneten Zustand sowie in umgekehrter Richtung überführbar ist.

2. Paketschleuse (1) nach Anspruch 1, bei welcher das Schleusentor (6, 81, 10) zumindest teilweise aus einem wärmedämmenden Material ausgebildet ist
und/oder welche ein auf der zweiten Seite (18) des Grundkörpers (3) angeordnetes Aufnahmeelement (19, 20) für das Paket (2) umfasst, das vorzugsweise ein Auffangnetz, eine Box, insbesondere eine Thermobox, oder ein Kühlschrank ist.

3. Paketschleuse (1) nach einem der Ansprüche 1 oder 2, bei welcher die Paketablagefläche (7) ein Förderelement (71), insbesondere ein Förderband aufweist, welches dazu ausgebildet ist, das Paket (2) von der ersten Seite (5) zur zweiten Seite (18) des Grundkörpers (3) oder in umgekehrter Richtung zu befördern
und/oder bei welcher die Paketablagefläche (7) eine Ladeeinrichtung zum elektrischen Laden von wiederaufladbaren Batteriezellen des unbemannten Flugzeugs aufweist.

4. Paketschleuse (1) nach einem der Ansprüche 1 bis 3, bei welcher die Kommunikationseinheit einen Sender für Positionsdaten der Paketschleuse und/oder einen Empfänger für Positionsdaten des unbemannten Flugzeuges und/oder Daten betreffend das Paket (2) aufweist.

5. Paketschleuse (1) nach einem der Ansprüche 1 bis 4, bei welcher das Schleusentor (6, 81, 10) zumindest in seinem geöffneten Zustand auf der ersten Seite (5) oder der zweiten Seite (18) des Grundkörpers (3) angeordnet ist
und/oder bei welcher der Grundkörper (3) als Rahmen ausgebildet ist, der zwei beabstandet zueinander angeordnete Vertikalschenkel (31, 32) und zwei beabstandet zueinander angeordnete Horizontalschenkel (33, 34) aufweist, wobei die Vertikalschenkel (31, 32) und die Horizontalschenkel (33, 34) den Durchlass (4) im Wesentlichen umschließen.

6. Paketschleuse (1) nach einem der Ansprüche 1 bis 5, bei welcher das Schleusentor (6, 81, 10) ein zumindest einteiliges Schiebetor (10) ist, das zur Überführung in den geschlossenen Zustand vor den Durchlass (4) schiebbar ist,
insbesondere bei welcher der Grundkörper (3) zumindest eine Führungsschiene (11) aufweist, der entlang das Schiebetor (10) zur Überführung des Schleusentors (1) in den geschlossenen Zustand vor den Durchlass (4) schiebbar ist, wobei die Führungsschiene (11) vorzugsweise an einem ersten Horizontalschenkel (34) des als Rahmen ausgebildeten Grundkörpers (3) angeordnet ist.

7. Paketschleuse (1) nach einem der Ansprüche 1 bis 5, bei welcher das Schleusentor (6, 81, 10) eine schwenkbare Klappe (6) ist, die um eine Achse schwenkbar an dem Grundkörper (3) angeordnet ist, wobei die Klappe (6) zur Überführung von dem geschlossenen Zustand in den geöffneten Zustand vorzugsweise um 90° um die Achse schwenkbar ist, insbesondere bei welcher die schwenkbare Klappe (6) um die Achse in Richtung der ersten Seite (5) des Grundkörpers (3) schwenkbar an dem Grundkörper (3) angeordnet ist, wobei die Paketablagefläche (7) im geschlossenen Zustand der schwenkbaren Klappe (6) auf einer dem Durchlass (4) zugewandten Seite der schwenkbaren Klappe (6) angeordnet ist.

8. Paketschleuse (1) nach einem der Ansprüche 1 bis 7, welche eine zumindest einteilig ausgebildete Schublade (12, 8) aufweist, die in Richtung der ersten Seite (5) des Grundkörpers (3) ausfahrbar ist, wobei die Paketablagefläche (7) auf einer dem Durchlass (4) zugewandten Seite der Schublade (12, 8) angeordnet ist.

9. Paketschleuse (1) nach Anspruch 8, bei welcher ein Schubladenboden (121, 82) der Schublade (12) mehrteilig ausgebildet ist, sodass die Schublade (12, 8) teleskopartig in Richtung der ersten Seite (5) des Grundkörpers (3) ausfahrbar ist
und/oder bei welcher das Schleusentor (6, 81, 10) eine Schubladenstirnwand (81) der Schublade (8) ist, welche im Wesentlichen senkrecht zu dem Schubladenboden (82) angeordnet ist, wobei die Schubladenstirnwand (81) den Durchlass im geschlossenen Zustand der Schubladenstirnwand (81) im Wesentlichen vollständig verschließt.

10. Paketschleuse (1) nach einem der Ansprüche 1 bis 9, bei welcher das Schleusentor (6, 81, 10) eine Schichtstruktur mit zumindest einer Kernschicht (61), die zumindest teilweise aus dem wärmedämmenden Material ausgebildet ist, und zumindest zwei die Kernschicht (61) jeweils einseitig begrenzende Außenschichten (62, 63) aufweist,
wobei die Kernschicht (61) weiterhin vorzugsweise das Antriebsmittel und/oder die Kommunikationseinheit umfasst.

11. Verfahren zum Anliefern eines Pakets (2) mit einem unbemannten Flugzeug, insbesondere einer Logistikdrohne, und zum Schleusen des Pakets (2) durch eine Paketschleuse (1) nach einem der vorangegangenen Patentansprüche, wobei das Verfahren die folgenden Schritte umfasst:
a) Anflug des unbemannten Flugzeugs, das mit dem Paket (2) beladen ist,
b) Übermitteln eines Anlieferungshinweises an eine Kommunikationseinheit der Paketschleuse (1),
c) Übermitteln von Positionsdaten der Paketschleuse (1) durch die Kommunikationseinheit an das unbemannte Flugzeug,
d) Überführung eines Schleusentors (6, 81, 10) der Paketschleuse von einem geschlossenen Zustand in einen geöffneten Zustand durch ein Antriebsmittel der Paketschleuse (1), wodurch ein Durchlass (4) eines Grundkörpers (3) der Paketschleuse (1) zum Schleusen des Pakets (2) durch den Durchlass (4) freigegeben wird,
e) Ansteuerung einer auf einer ersten Seite (5) des Grundkörpers (3) angeordneten Paketablagefläche (7) der Paketschleuse (1) durch das unbemannte Flugzeug anhand der übermittelten Positionsdaten,
f) Ablage des Pakets (2) auf der Paketablagefläche (7) durch das unbemannte Flugzeug,
g) Schleusen des Pakets (2) von der ersten Seite (5) des Grundkörpers (3) durch den Durchlass (4) auf eine zweite Seite (18) des Grundkörpers (3),
h) Überführung des Schleusentors (6, 81, 10) der Paketschleuse (1) von dem geöffneten Zustand in den geschlossenen Zustand durch das Antriebsmittel der Paketschleuse (1), wodurch der Durchlass (4) des Grundkörpers (3) der Paketschleuse (1) verschlossen wird.

12. Verfahren nach Anspruch 11, bei welchem das Paket (2) nach dem Verfahrensschritt (g) von einem auf der zweiten Seite (18) des Grundkörpers (3) angeordneten Paketaufnahmeelement (19, 20) der Paketschleuse (1) aufgenommen wird, welches vorzugsweise ein Auffangnetz, eine Box, insbesondere eine Thermobox, oder ein Kühlschrank ist und/oder bei welchem das Paket (2) in Verfahrensschritt (g) von einem Förderelement (71), insbesondere einem Förderband, von der ersten Seite (5) des Grundkörpers (3) durch den Durchlass (4) auf eine zweite Seite (18) des Grundkörpers (3) befördert wird, vorzugsweise in das Paketaufnahmeelement (19, 20).

13. Verfahren nach einem der Ansprüche 11 oder 12, bei welchem wiederaufladbare Batteriezellen des unbemannten Flugzeugs während oder nach dem Verfahrensschritt (f) von einer Ladeeinrichtung der Paketablagefläche (7) elektrisch geladen werden.

14. Außenwand (13) eines Gebäudes umfassend eine zu einer Gebäudeinnenseite hin ausgerichtete Wandinnenseite (A), eine zu einer Gebäudeaußenseite hin ausgerichtete Wandaußenseite (B), einen Wandkörper (16), eine Wanddämmung (17) und eine Paketschleuse (1) nach einem der Ansprüche 1 bis 10, wobei ein Grundkörper (3) mit zumindest einem Durchlass (4) der Paketschleuse (1) die Außenwand (13) von der Wandinnenseite (A) zur Wandaußenseite (B) durchquert.

15. Umwehrung, insbesondere ein Geländer oder eine Brüstung, für einen Balkon eines Gebäudes umfassend zumindest ein vertikal stehendes Umwehrungselement, eine zu einer Gebäudeseite hin ausgerichtete Umwehrungsinnenseite des Umwehrungselements, eine der Umwehrungsinnenseite gegenüberliegende Umwehrungsaußenseite des Umwehrungselements und eine Paketschleuse (1) nach einem der Ansprüche 1 bis 10, wobei ein Grundkörper mit zumindest einem Durchlass der Paketschleuse das vertikal stehende Umwehrungselement von der Umwehrungsaußenseite zur Umwehrungsinnenseite durchquert.
